# EUROPEAN PATENT APPLICATION

(11) **EP 4 614 623 A1**
(43) Date of publication of application: **10.09.2025**
(21) Application number: 23885727.0
(22) Date of filing: 30.10.2023
(51) Int. Cl.: H01M 4/62, H01M 4/13, H01M 4/139, H01M 10/052, H01M 10/0566, H01M 10/058

(54) **SLURRY FOR NONAQUEOUS ELECTROLYTE SECONDARY BATTERIES, NONAQUEOUS ELECTROLYTE SECONDARY BATTERY, AND METHOD FOR PRODUCING NONAQUEOUS ELECTROLYTE SECONDARY BATTERY**

(30) Priority: 31.10.2022 JP 2022175037
(71) Applicant: FUJIFILM Corporation, Tokyo 106-8620 (JP)
(72) Inventor: MIZOGUCHI, Takao, Minamiashigara-shi, Kanagawa 250-0193 (JP); OGAWA, Taiki, Minamiashigara-shi, Kanagawa 250-0193 (JP)
(74) Representative: HGF
(86) International application number: PCT/JP2023/039135
(87) International publication number: WO 2024/095973

(57) **Abstract**

Provided are a slurry for a non-aqueous electrolytic solution secondary battery, containing solid particles which contain an electrode active material and a conductive auxiliary agent, the solid particles being dispersed in a non-aqueous electrolytic solution, in which the non-aqueous electrolytic solution is obtained by dissolving a lithium salt and a polymer (I) in a non-aqueous solvent, the polymer has a weight-average molecular weight of 1,000 to 150,000, and a content of the polymer (I) in the non-aqueous electrolytic solution is 0.1% to 5.0% by mass; and a non-aqueous electrolytic solution secondary battery and a manufacturing method thereof, having the slurry as an electrode active material layer.

## Description

### BACKGROUND OF THE INVENTION

### 1. Field of the Invention

The present invention relates to a slurry for a non-aqueous electrolytic solution secondary battery, a non-aqueous electrolytic solution secondary battery, and a manufacturing method of a non-aqueous electrolytic solution secondary battery.

### 2. Description of the Related Art

A non-aqueous electrolytic solution secondary battery has a structure in which a positive electrode collector, a positive electrode active material layer, a separator, a negative electrode active material layer, and a negative electrode collector are laminated in this order. The positive electrode active material layer and the negative electrode active material layer are filled with a non-aqueous electrolytic solution and are separated by the separator. The separator has pores and functions as a positive negative electrode-separating film which insulates the positive electrode and the negative electrode from each other while allowing transmission of the non-aqueous electrolytic solution and ions in a state in which a typical battery is used. Charging and discharging can be performed by reciprocating ions between the positive electrode and the negative electrode. A lithium ion secondary battery is widely used at present, and lithium ions reciprocate between the positive electrode and the negative electrode to repeat charging and discharging.

A technique for increasing a capacity of the non-aqueous electrolytic solution secondary battery has been studied. For example, JP2017-147222A discloses an electrochemical cell including a positive electrode consisting of a non-bonded body which contains a first active material and an electrolytic solution in a first non-aqueous liquid electrolyte; a negative electrode consisting of a non-bonded body which contains a second active material and an electrolytic solution in a second non-aqueous liquid electrolyte; and an ion permeable membrane disposed between the positive electrode and the negative electrode, in which the positive electrode and the negative electrode each have a thickness of approximately 200 µm to approximately 3,000 µm.

According to the technique disclosed in JP2017-147222A, since an electrode active material layer (a positive electrode active material layer and a negative electrode active material layer) is in a slurry-like and non-bonded state as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery.

### SUMMARY OF THE INVENTION

As disclosed in JP2017-147222A, the present inventors have repeatedly studied a battery (also referred to as "semi-solid state secondary battery" in the present specification) in which an electrode active material layer is formed as an electrode slurry layer obtained by dispersing electrode active material particles in a non-aqueous electrolytic solution to achieve an increase in capacity. As a result, it has been found that, in a case where a content of the electrode active material particles in the electrode slurry layer is increased in order to achieve further increase in capacity, the performance (discharge capacity retention rate during high current discharging and the like) of the obtained non-aqueous electrolytic solution secondary battery is deteriorated.

An object of the present invention is to provide a slurry for a non-aqueous electrolytic solution secondary battery, which is suitable for forming an electrode slurry layer of a semi-solid state secondary battery and is less likely to cause a deterioration in performance of a non-aqueous electrolytic solution secondary battery even in a case where a content of an electrode active material is increased. Another object of the present invention is to provide a non-aqueous electrolytic solution secondary battery having the slurry as an electrode active material layer, and a manufacturing method thereof.

As a result of intensive studies in view of the above-described object, the present inventors have found that, in a slurry obtained by dispersing solid particles containing an electrode active material and a conductive auxiliary agent in a non-aqueous electrolytic solution, even in a case where a content of the electrode active material is increased by dissolving a specific amount of a polymer having a molecular weight in a specific range in the non-aqueous electrolytic solution together with a lithium salt in a non-aqueous solvent, a semi-solid state secondary battery in which this slurry is used as an electrode active material layer can achieve a higher discharge capacity even during high current discharging. The present invention has been completed by further repeating studies on the basis of the above-described finding.

The above-described objects of the present invention have been achieved by the following means.
[1] A slurry for a non-aqueous electrolytic solution secondary battery, comprising:
   solid particles containing an electrode active material and a conductive auxiliary agent, the solid particles being dispersed in a non-aqueous electrolytic solution,
   in which the non-aqueous electrolytic solution is obtained by dissolving a lithium salt and a polymer (I) in a non-aqueous solvent,
   the polymer has a weight-average molecular weight of 1,000 to 150,000, and
   a content of the polymer (I) in the non-aqueous electrolytic solution is 0.1% to 5.0% by mass.
[2] The slurry for a non-aqueous electrolytic solution secondary battery according to [1],
   in which an adsorption rate of the polymer (I) to acetylene black is 15% or more.
[3] The slurry for a non-aqueous electrolytic solution secondary battery according to [1] or [2],
   in which the electrode active material is a positive electrode active material, and
   an adsorption rate of the polymer (I) to the positive electrode active material is 10% or more.
[4] The slurry for a non-aqueous electrolytic solution secondary battery according to [1] or [2],
   in which the electrode active material is a negative electrode active material, and
   an adsorption rate of the polymer (I) to the negative electrode active material is 10% or more.
[5] The slurry for a non-aqueous electrolytic solution secondary battery according to any one of [1] to [4],
   in which the polymer (I) includes at least one of an amino group, a carboxy group, a phosphate group, a phosphonic acid group, a sulfo group, a hydroxy group, a carbamoyl group, or an aromatic group.
[6] The slurry for a non-aqueous electrolytic solution secondary battery according to any one of [1] to [5],
   in which a content of the electrode active material in the slurry for a non-aqueous electrolytic solution secondary battery is 40% to 90% by mass, and
   a content of the conductive auxiliary agent in the slurry for a non-aqueous electrolytic solution secondary battery is 0.1% to 10% by mass.
[7] A non-aqueous electrolytic solution secondary battery comprising:
   the slurry for a non-aqueous electrolytic solution secondary battery according to any one of [1] to [6], as an electrode active material layer.
[8] A manufacturing method of a non-aqueous electrolytic solution secondary battery, comprising:
   incorporating the slurry for a non-aqueous electrolytic solution secondary battery according to any one of [1] to [6] as an electrode active material layer.

In the present invention and the present specification, any numerical range expressed using "to" refers to a range including the numerical values before and after the "to" as a lower limit value and an upper limit value, respectively.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

In the present invention, "electrolytic solution" is a solution. That is, the electrolytic solution is composed of a solvent and various components dissolved in the solvent. Therefore, the "electrolytic solution" itself does not contain a substance insoluble in the solvent constituting the electrolytic solution.

The slurry for a non-aqueous electrolytic solution secondary battery according to the aspect of the present invention is a slurry suitable for forming an electrode slurry layer of a semi-solid state secondary battery, and is unlikely to cause a deterioration in performance of a non-aqueous electrolytic solution secondary battery even in a case where the content of the electrode active material is increased. In manufacturing of the non-aqueous electrolytic solution secondary battery according to the aspect of the present invention, in a case where the slurry used for forming the electrode slurry layer contains a high content of the electrode active material, a high-performance non-aqueous electrolytic solution secondary battery can be obtained. With the manufacturing method of a non-aqueous electrolytic solution secondary battery according to the aspect of the present invention, even in a case where the slurry used for forming the electrode slurry layer contains a high content of the electrode active material, a high-performance non-aqueous electrolytic solution secondary battery can be obtained.

### BRIEF DESCRIPTION OF THE DRAWINGS

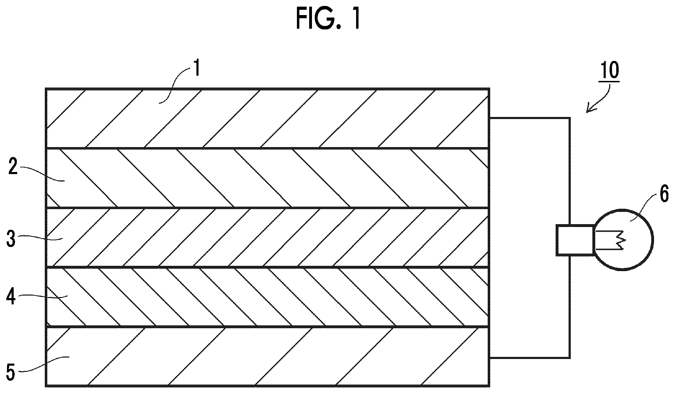

Fig. 1 is a longitudinal cross-sectional view schematically showing a basic structure of a non-aqueous electrolytic solution secondary battery according to an embodiment of the present invention.

### DESCRIPTION OF THE PREFERRED EMBODIMENTS

Preferred embodiments of the present invention will be described, but the present invention is not limited to these embodiments except as specified in the present invention.

### [Slurry for non-aqueous electrolytic solution secondary battery]

The slurry for a non-aqueous electrolytic solution secondary battery according to the embodiment of the present invention (also referred to as "slurry according to the embodiment of the present invention") is a slurry obtained by dispersing solid particles containing an electrode active material and a conductive auxiliary agent in a non-aqueous electrolytic solution, and is a slurry suitable for forming an electrode slurry layer of a non-aqueous electrolytic solution secondary battery. In the non-aqueous electrolytic solution, a solute containing a lithium salt and a specific polymer is dissolved in a non-aqueous solvent as a medium. The non-aqueous electrolytic solution may contain a metal salt other than the lithium salt (for example, a potassium salt, a sodium salt, a calcium salt, a magnesium salt, or the like), in addition to the lithium salt. The metal salt contained in the electrolytic solution is typically a lithium salt, and in this case, the slurry according to the embodiment of the present invention is used as a so-called slurry for a lithium ion secondary battery.

It is considered that, in the slurry according to the embodiment of the present invention, the polymer (I) acts like a dispersant with respect to the solid particles in the slurry, and aggregation of the solid particles in the slurry can be suppressed, and dispersibility of the solid particles can be effectively improved.

Each component constituting the slurry according to the embodiment of the present invention will be described.

### <Non-aqueous electrolytic solution>

The non-aqueous electrolytic solution is obtained by dissolving a lithium salt and a polymer (I) in a non-aqueous solvent.

### (Non-aqueous solvent)

As the medium, a non-aqueous solvent is used in the non-aqueous electrolytic solution constituting the slurry according to the embodiment of the present invention.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of ethylene carbonate, propylene carbonate, dimethyl carbonate, diethyl carbonate, ethyl methyl carbonate, or γ-butyrolactone is preferable; and a combination of a high-viscosity (high-dielectric constant) solvent (for example, relative permittivity ε ≥ 30) such as ethylene carbonate and propylene carbonate and a low-viscosity solvent (for example, viscosity ≤ 1 mPa·s) such as dimethyl carbonate, ethyl methyl carbonate, and diethyl carbonate is more preferable. By using a mixed solvent having such a combination, dissociation properties of electrolyte salts and mobility of ions are improved. As the above-described non-aqueous solvent, a combination of ethylene carbonate, dimethyl carbonate, and ethyl methyl carbonate is particularly preferable.

The non-aqueous solvent used in the present invention is not limited to these solvents.

A content of the non-aqueous solvent in the above-described electrolytic solution may be such that the total content of the lithium salt, the polymer (I), and the non-aqueous solvent is 100% by mass.

The content of the non-aqueous solvent in the above-described non-aqueous electrolytic solution is preferably 49.9% to 89.9% by mass, more preferably 60.0% to 89.9% by mass, still more preferably 70.0% to 88.0% by mass, and even more preferably 70.0% to 85.0% by mass.

### (Lithium salt)

As the lithium salt, a lithium salt which is usually used for an electrolyte of a lithium ion secondary battery is preferable, and examples thereof include the following lithium salts.

(L-1) Inorganic lithium salt: inorganic fluoride salt such as LiPF₆, LiBF₄, LiAsF₆, and LiSbF₆; perhalogenate such as LiClO₄, LiBrO₄, and LiIO₄; an inorganic chloride salt such as LiAlCl₄; and the like

(L-2) Fluorine-containing organic lithium salt: perfluoroalkane sulfonate such as LiCF₃SO₃; perfluoroalkanesulfonylimide salt such as LiN(CF₃SO₂)₂, LiN(CF₃CF₂SO₂)₂, LiN(FSO₂)₂, and LiN(CF₃SO₂)(C₄F₉SO₂); perfluoroalkane sulfonylmethide salt such as LiC(CF₃SO₂)₃; fluoroalkyl fluorophosphate such as Li[PF₅(CF₂CF₂CF₃)], Li [PF₄(CF₂CF₂CF_{3 h}]_{,} Li[PF₃(CF₂CF₂CF₃)₃], Li[PF5(CF₂CF₂CF₂CF₃)], Li[PF₄(CF₂CF₂CF₂CF₃)₂], and Li[PF₃(CF₂CF₂CF₂CF₃)₃]; and the like

(L-3) Oxalatoborate salt: lithium bis(oxalato)borate, lithium difluorooxalatoborate, and the like

Among these, LiPF₆, LiBF₄, LiAsF₆, LiSbF₆, LiClO₄, Li(R^{f1}SO₃), LiN(R^{f1}SO₂)₂, LiN(FSO₂)₂, or LiN(R^{f1}SO₂)(R^{e2}SO₂) is preferable; LiPF₆, LiBF₄, LiN(R^{f1}SO₂)₂, LiN(FSO₂)₂, or LiN(R^{f1}SO₂)(R^{e2}SO₂) is more preferable; and LiPF₆ is particularly preferable. Here, R^{f1} and R^{f2} each represent a perfluoroalkyl group, and the number of carbon atoms in the perfluoroalkyl group is preferably 1 to 6.

As the lithium salt used in the above-described non-aqueous electrolytic solution, one kind of electrolyte may be used alone, or two or more kinds of electrolytes may be arbitrarily combined.

A concentration of the lithium salt in the above-described non-aqueous electrolytic solution is usually 10.0% to 50.0% by mass, preferably 15.0% to 30.0% by mass. In the electrolytic solution of the present invention, the concentration of the lithium salt can be 11.0% to 30.0% by mass or 12.0% to 20.0% by mass. The concentration is preferably 0.5 to 1.5 M.

### (Polymer (I))

The polymer (I) is not particularly limited as long as it has a weight-average molecular weight of 1,000 to 150,000 and is a polymer dissolved in the above-described non-aqueous solvent.

The polymer (I) has a weight-average molecular weight of 1,000 to 150,000. In a case where the weight-average molecular weight of the polymer (I) is less than 1,000, the effect of suppressing the deterioration in performance of the secondary battery cannot be obtained. In addition, in a case where the molecular weight of the polymer (I) in the non-aqueous electrolytic solution is more than 150,000, the effect of suppressing the deterioration in performance of the secondary battery is reduced. The weight-average molecular weight of the polymer (I) is preferably 1,000 to 120,000, more preferably 1,000 to 100,000, still more preferably 1,000 to 70,000, and particularly preferably 1,000 to 50,000.

### (Measuring method of weight-average molecular weight)

In the present invention, the weight-average molecular weight of the polymer is measured by gel permeation chromatography (GPC). The weight-average molecular weight is a weight-average molecular weight in terms of polyethylene oxide. As a method of measuring the weight-average molecular weight, a value measured by the following method is adopted in principle. In this case, an appropriate eluent may be selected and used depending on the type of the polymer.
Measuring instrument: HLC-8320GPC (product name, manufactured by Tosoh Corporation)
Column: TOSOH TSKgel guard column Super HZ-L, Super HZM-H, Super HZ4000, Super HZ2000 (trade name, all manufactured by Tosoh Corporation)
Carrier: tetrahydrofuran (THF) solution
Measurement temperature: 40°C
Carrier flow rate: 0.35 ml/min
Sample Concentration: 0.2% by mass
Detector: refractive index (RI) detector

An adsorption rate of the polymer (I) to acetylene black is preferably 15% or more. The adsorption rate is preferably 16% or more, more preferably 18% or more, still more preferably 20% or more, even more preferably 22% or more, and particularly preferably 24% or more. In addition, the adsorption rate is usually 90% or less, and it is practical to set the adsorption rate to 80% or less. Therefore, the adsorption rate of the polymer (I) to acetylene black is preferably 15% to 90%, more preferably 16% to 90%, still more preferably 18% to 90%, even more preferably 20% to 90%, even still more preferably 22% to 90%, and further more preferably 24% to 80%. The adsorption rate of the polymer (I) to acetylene black can be measured by the following method.

### (Method for determining adsorption rate to acetylene black)

A mixed solvent in which ethylene carbonate (EC), dimethyl carbonate (DMC), and ethyl methyl carbonate (EMC) are mixed at a mass ratio of EC:DMC:EMC = 3:4:3 is mixed with LiPF₆ as the lithium salt to a concentration of 1 M and mixed with the polymer (I) to a concentration of 3% by mass, thereby preparing an electrolytic solution (i). The electrolytic solution (i) and acetylene black (average primary particle diameter (volume-based median diameter D50): 35 nm, specific surface area: 68 m²/g, powder form) are mixed with each other at 25°C so that a mass ratio of acetylene black and the electrolytic solution is 5:95, thereby obtaining 10 g of a mixture. After standing the mixture for 1 hour, the electrolytic solution (referred to as an electrolytic solution (ii)) is taken out. The amount of the polymer (I) remaining in the electrolytic solution (ii) is determined by H-NMR measurement. The adsorption rate of the polymer (I) to acetylene black is calculated according to the following expression. In the calculation of the adsorption rate, assuming that the amount of the electrolytic solution is the same at 9.5 g before and after the mixing of the acetylene black and the electrolytic solution, the amount of the polymer (I) in 9.5 g of the electrolytic solution before and after the mixing is calculated and substituted into the following expression. Therefore, in the following expression, the amount of the electrolytic solution (i) and the amount of the electrolytic solution (ii) are the same. Adsorption rate (%) of polymer (I) = 100 - {[Amount (g) of polymer (I) in electrolytic solution (ii)]/[Amount (g) of polymer (I) in electrolytic solution (i)]} × 100

As the above-described acetylene black, for example, DENKA BLACK (trade name) manufactured by Denka Co., Ltd. can be used.

In addition, the "powder" in the acetylene black used in the "adsorption rate to acetylene black" test described above represents a shape of powder (including primary particles and/or aggregates (secondary particles) in which primary particles are aggregated); and for example, a pressed powder and granules are not included.

In a case where a commercially available acetylene black is used, the average particle diameter of the acetylene black is adopted as the value described in the catalog of the manufacturer.

In a case where the information on the average particle diameter of the manufacturer cannot be obtained or in a case where synthesized acetylene black is used, the average particle diameter value (volume-based median diameter D50 in water) obtained by dispersing the acetylene black in water and measuring the average particle diameter with a laser diffraction/scattering-type particle size distribution analyzer (for example, Particle LA-960V2 manufactured by HORIBA, Ltd.) is adopted.

In the non-aqueous electrolytic solution secondary battery, a carbonaceous material (single carbon material) such as the acetylene black is often used as a negative electrode active material of a negative electrode active material layer, and is also used as a conductive auxiliary agent of the negative electrode active material layer. In addition, it is also common that the carbonaceous material is used as a conductive auxiliary agent in a positive electrode active material layer. For example, carbonaceous materials such as carbon black, graphite, activated carbon, carbon fiber, carbon nanotube, coke, soft carbon, and hard carbon are used as the negative electrode active material, and also used as the conductive auxiliary agent.

The fact that the polymer (I) exhibits a high adsorption rate of 15% or more to acetylene black means that the polymer (I) has a higher affinity for the negative electrode active material or the conductive auxiliary agent. Therefore, in a case where the electrode slurry containing the electrolytic solution obtained by dissolving the polymer (I) is applied to a secondary battery in which the content of the electrode active material is increased, the performance thereof can be further improved.

It is preferable that the polymer (I) exhibits an adsorption rate of 10% or more not only to the above-described specific acetylene black but also to other carbonaceous materials contained in the electrode slurry in which the polymer (I) is used. The adsorption rate of the polymer (I) to the carbonaceous material can be determined by the same method as the method of determining the adsorption rate to the acetylene black, except that the carbonaceous material is used in the method of determining the adsorption rate to the acetylene black. The preferred range of the adsorption rate of the polymer (I) to the carbonaceous material can be the same as the preferred range of the adsorption rate of the polymer (I) to the acetylene black.

In a case where the polymer (I) is used in an electrode slurry for a negative electrode active material layer, the adsorption rate of the polymer (I) to the negative electrode active material used in the electrode slurry is preferably 8% or more. The adsorption rate to the negative electrode active material is preferably 10% or more, more preferably 12% or more, still more preferably 14% or more, and even more preferably 18% or more. In addition, the adsorption rate is usually 80% or less, and it is practical to set the adsorption rate to 70% or less. Therefore, the adsorption rate is preferably 8% to 80% or less, more preferably 10% to 70% or less, still more preferably 12% to 70%, even more preferably 14% to 70%, and even still more preferably 18% to 70%. The adsorption rate of the polymer (I) to the negative electrode active material can be determined by the same method as the method of determining the adsorption rate to the acetylene black, except that the positive electrode active material is used in the method of determining the adsorption rate to the acetylene black.

The fact that the polymer (I) exhibits a high adsorption rate of 8% or more to the above-described negative electrode active material means that the polymer (I) has a higher affinity for the negative electrode active material.

In a case where the polymer (I) is used in an electrode slurry for a positive electrode active material layer, the adsorption rate of the polymer (I) to the positive electrode active material used in the electrode slurry is preferably 8% or more. The adsorption rate to the positive electrode active material is preferably 10% or more, more preferably 12% or more, and still more preferably 14% or more. In addition, the adsorption rate is usually 80% or less, and it is practical to set the adsorption rate to 70% or less. Therefore, the adsorption rate is preferably 8% to 80% or less, more preferably 10% to 70% or less, still more preferably 12% to 70%, and even more preferably 14% to 70%. The adsorption rate of the polymer (I) to the positive electrode active material can be determined by the same method as the method of determining the adsorption rate to the acetylene black, except that the positive electrode active material is used in the method of determining the adsorption rate to the acetylene black.

The fact that the polymer (I) exhibits a high adsorption rate of 8% or more to the above-described positive electrode active material means that the polymer (I) has a higher affinity for the positive electrode active material.

The above-described polymer (I) preferably satisfies at least one of the following (a) to (d).
(a) Aromatic ring content: 40% by mass or more
(b) Acid value: 30 mgKOH/g or more
(c) Amine value: 30 mgKOH/g or more
(d) Hydroxyl number: 30 mgKOH/g or more

The fact that at least one of the above (a) to (d) is satisfied means that the polymer (I) has a predetermined level of high content of a group having an affinity for the solid particles, more preferably the carbonaceous material.

The aromatic ring content in the above (a) is preferably 40% by mass or more, more preferably 45% by mass or more, and still more preferably 50% by mass or more. The upper limit thereof is not particularly limited, but is practically 70% by mass or less. Therefore, the aromatic ring content in the above (a) is preferably 40% to 70% by mass, more preferably 45% to 70% by mass, and still more preferably 50% to 70% by mass.

The aromatic ring content is calculated by the following expression. Aromatic ring content = [Total mass of aromatic rings constituting polymer (I)/Total mass of polymer (I)] × 100

In a case where the aromatic ring has a substituent, the mass of each aromatic ring in the above expression means the mass of the aromatic ring as the substituent is replaced with a hydrogen atom. That is, the mass of each aromatic ring is the mass of a structure consisting of ring-constituting atoms of the aromatic ring and a hydrogen atom bonded to the ring-constituting atoms.

The acid value in the above (b) is more preferably 30 mgKOH/g or more, and still more preferably 45 mgKOH/g or more. The upper limit thereof is not particularly limited, but is practically 60 mgKOH/g or less. Therefore, the acid value in the above (b) is preferably 30 to 60 mgKOH/g and more preferably 45 to 60 mgKOH/g.

The amine value in the above (c) is more preferably 30 mgKOH/g or more, and still more preferably 45 mgKOH/g or more. The upper limit thereof is not particularly limited, but is practically 60 mgKOH/g or less. Therefore, the amine value in the above (c) is preferably 30 to 60 mgKOH/g and more preferably 45 to 60 mgKOH/g.

The hydroxyl number in the above (d) is more preferably 30 mgKOH/g or more, and still more preferably 45 mgKOH/g or more. The upper limit thereof is not particularly limited, but is practically 60 mgKOH/g or less. Therefore, the hydroxyl number in the above (d) is preferably 30 to 60 mgKOH/g and more preferably 45 to 60 mgKOH/g.

The acid value in the above (b) can be determined according to the neutralization titration method of JIS K 0070: 1992.

The amine value in the above (c) can be determined in accordance with ASTM D2074-07 (total amine value).

The hydroxyl number in the above (d) can be determined according to the neutralization titration method of JIS K 0070: 1992.

The above-described polymer (I) preferably includes an adsorptive group with respect to the solid particles in the slurry. Specifically, the above-described polymer (I) preferably includes at least one group (hereinafter, also referred to as an adsorptive group) of an amino group, a carboxy group, a phosphate group, a phosphonic acid group, a sulfo group, a hydroxy group, a carbamoyl group, or an aromatic group. Such a group exhibits adsorptivity to the solid particles in the slurry, and contributes to improving the affinity with the positive electrode active material, the negative electrode active material, the conductive auxiliary agent, and the like. The values in the above (a) to (d) can be adjusted by controlling the content of each of the above-described groups (the amount of the group introduced into the polymer).

The above-described amino group may be an unsubstituted amino group, a monosubstituted amino group, or a disubstituted amino group. In a case where the amino group is a substituted amino group, a substituent included in the amino group is preferably an alkyl group (preferably an alkyl group having 1 to 10 carbon atoms, more preferably an alkyl group having 1 to 6 carbon atoms, still more preferably an alkyl group having 1 to 4 carbon atoms, and even more preferably methyl or ethyl).

The above-described carboxy group, phosphate group (-OP(=O)(-OH)OH), phosphonic acid group (-P(=O)(-OH)OH), and sulfo group may have a structure of a salt. In addition, the structure may be a structure of an acid anhydride. That is, in the present invention, the term "carboxy group" simply means a carboxy group (-COOH), a salt of the carboxy group, and a group in which the carboxy group is dehydrated and condensed. The same applies to the phosphate group, the phosphonic acid group, and the sulfo group.

An amino group included in the above-described carbamoyl group (aminocarbonyl group) may be an unsubstituted amino group, a monosubstituted amino group, or a disubstituted amino group. In a case where the amino group included in the carbamoyl group is a substituted amino group, a substituent included in the amino group is preferably an alkyl group (preferably an alkyl group having 1 to 10 carbon atoms, more preferably an alkyl group having 1 to 6 carbon atoms, still more preferably an alkyl group having 1 to 4 carbon atoms, and even more preferably methyl or ethyl).

The above-described aromatic group means a monovalent group obtained by removing one hydrogen atom from an aromatic ring. The aromatic group may be an aromatic hydrocarbon group or an aromatic heterocyclic group, and an aromatic hydrocarbon group is more preferable. The number of carbon atoms in the aromatic group is preferably 5 to 20. The above-described aromatic group may have a substituent. Therefore, the above-described aromatic hydrocarbon group and the above-described aromatic heterocyclic group may also have a substituent. The aromatic ring constituting the aromatic group may be a monocycle or a fused ring, and a monocycle is preferable. The above-described aromatic group is particularly preferably a phenyl group.

The polymer (I) may be a homopolymer or a copolymer as long as it satisfies the definition of the present invention, and is usually a copolymer. A polymerization form of the copolymer may be any of random and block.

The polymer (I) may be a polymer by addition polymerization or a polymer by condensation polymerization, and a polymer by addition polymerization (polymer in which a main chain is composed of a carbon-carbon bond) is preferable. By introducing the above-described adsorptive group into these polymers, a target polymer (I) can be obtained. Examples of a monomer for introducing the above-described adsorptive group include (meth)acrylic acid; maleic acid anhydride; (meth)acrylamide; styrene; and a vinyl compound or an acrylic compound having an amino group, a phosphate group, a phosphonic acid group, a sulfo group, a hydroxy group, or a carbamoyl group. In addition, it is also preferable that the polymer (I) has a constitutional component derived from an alkyl (meth)acrylate, an aryl (meth)acrylate, or the like, as a constitutional component.

The polymer (I) used in the present invention can be obtained by a synthesis method for a typical polymer according to the polymerization form.

The content of the polymer (I) in the non-aqueous electrolytic solution is 0.1% to 5.0% by mass. In a case where the content of the polymer (I) in the non-aqueous electrolytic solution is less than 0.1% by mass, the effect of suppressing the deterioration in performance of the secondary battery to be obtained cannot be sufficiently obtained. In addition, in a case where the content of the polymer (I) in the non-aqueous electrolytic solution is more than 5.0% by mass, the effect of suppressing the deterioration in performance of the secondary battery to be obtained is reduced. The content of the polymer (I) in the non-aqueous electrolytic solution is preferably 0.3% to 5.0% by mass, more preferably 0.4% to 4.0% by mass, and still more preferably 0.5% to 3.0% by mass.

The electrolytic solution constituting the slurry according to the embodiment of the present invention can be obtained by mixing the non-aqueous solvent, the lithium salt, and the polymer (I) and dissolving the lithium salt and the polymer (I) in the non-aqueous solvent.

### <Electrode active material>

### (Positive electrode active material)

As the positive electrode active material, a positive electrode active material capable of reversibly intercalating and deintercalating lithium ions is preferable. The material is not particularly limited as long as the material has the above-described characteristics, and may be transition metal oxides, organic matter, elements capable of being complexed with Li, such as sulfur, complexes of sulfur and metal, or the like.

Among these, as the positive electrode active material, lithium-containing transition metal oxides are preferably used, and lithium-containing transition metal oxides having a transition metal element M^{a} (one or more elements selected from Co, Ni, Fe, Mn, Cu, and V) are more preferable. In addition, an element M^{b} (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element M^{a}. It is more preferable that the transition metal oxide is synthesized by mixing the above-described components such that a molar ratio Li/Ma is 0.3 to 2.2.

Specific examples of the lithium-containing transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the transition metal oxide having a bedded salt-type structure (MA) include LiCoO₂ (lithium cobalt oxide [LCO]), LiNi₂O₂ (lithium nickelate), LiNi_{0.85}C_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Specific examples of the transition metal oxide having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound (MC) include olivine-type iron phosphate salts such as LiFePO₄ and Li₃Fe₂(PO₄)₃; cobalt phosphates such as LiCoPO₄; iron pyrophosphates such as LiFeP₂O₇; and monoclinic NASICON-type vanadium phosphate salts such as Li₃V₂(PO₄)₃ (lithium vanadium phosphate).

Examples of the lithium-containing transition metal halogenated phosphoric acid compound (MD) include iron fluorophosphates such as Li₂FePO₄F, manganese fluorophosphates such as Li₂MnPO₄F, and cobalt fluorophosphates such as Li₂CoPO₄F.

Examples of the lithium-containing transition metal silicate compound (ME) include Li₂FeSiO₄, Li₂MnSiO₄, and Li₂CoSiO₄.

In the present invention, the positive electrode active material is preferably the lithium-containing transition metal phosphoric acid compound (MC), and more preferably LiFePO₄.

A shape of the positive electrode active material is not particularly limited, but is preferably a particulate shape. An average particle diameter (sphere-equivalent average particle diameter) of the positive electrode active material is not particularly limited. For example, it can be set to 0.1 to 50 µm. In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the average particle diameter with a laser diffraction/scattering-type particle size distribution analyzer (for example, Particle LA-960V2 manufactured by HORIBA, Ltd.) is adopted.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and Li₃AlF₆. In addition, a carbon-based material such as C, SiC, and SiOC (carbon-added silicon oxide) can also be used as the surface coating material.

From the viewpoint of increasing electron conductivity to a desired level, the positive electrode active material may be coated with the carbon-based material. It is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

In a case of forming the positive electrode active material layer, a mass (mg) of the positive electrode active material per unit area (cm²) of the positive electrode active material layer (mass per unit area) is not particularly limited. The mass per unit area can be appropriately determined depending on the designed battery capacity.

### (Negative electrode active material)

As the negative electrode active material, a positive electrode active material capable of reversibly absorbing and deintercalating lithium ions is preferable. The material is not particularly limited as long as the material has the above-described characteristics, and examples thereof include a carbonaceous material, a silicon-based material, a metal oxide, a metal composite oxide, lithium, a lithium alloy, and a negative electrode active material capable of forming an alloy with lithium. Among these, in view of reliability, a carbonaceous material or a silicon-based material is preferably used.

The carbonaceous material used as the negative electrode active material is a material substantially consisting of carbon. Examples thereof include carbon black such as petroleum pitch, graphite (natural graphite and artificial graphite such as vapor-grown graphite), and carbonaceous material obtained by baking various synthetic resins such as a polyacrylonitrile (PAN)-based resin and a furfuryl alcohol resin. Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

The metal oxide and the metal composite oxide, used as the negative electrode active material, are not particularly limited as long as they are oxides capable of absorbing and deintercalating lithium, and are preferably amorphous oxides. Preferred examples thereof also include chalcogenide which is a reaction product of a metal element and a Group 16 element of the periodic table. The "noncrystalline" herein means an oxide having a broad scattering band with an apex in a range of 20° to 40° in terms of the 2θ value in case of being measured by an X-ray diffraction method using a CuKα ray, and the oxide may have a crystalline diffraction line.

In the compound group consisting of the noncrystalline oxides and the chalcogenides described above, the noncrystalline oxide of a metalloid element or the above-described chalcogenide is more preferable; and an oxide consisting of one element or a combination of two or more elements selected from elements (Al, Ga, Si, Sn, Ge, Pb, Sb, and Bi) of Group 13 (IIIB) to Group 15 (VB) of the periodic table or the chalcogenide is particularly preferable. Specific examples of the preferred noncrystalline oxide and chalcogenide preferably include Ga₂O₃, GeO, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Sb₂O₅, Bi₂O₃, Bi₂O₄, GeS, PbS, PbS₂, Sb₂S₃, and Sb₂S₅.

From the viewpoint of charge and discharge characteristics at a high current density, it is preferable that the metal (composite) oxide and the chalcogenide contain at least one of titanium or lithium as a constitutional component. Examples of the metal composite oxide (lithium composite metal oxide) including lithium include a composite oxide of lithium oxide and the above metal (composite) oxide or the above chalcogenide, and specifically, Li₂SnO₂.

It is also preferable that the negative electrode active material contains a titanium atom. More specifically, TiNb₂O₇ (niobium titanium oxide [NTO]) or Li₄Ti₅O₁₂ (lithium titanate [LTO]), which goes through a slight volume change in absorbing and deintercalating lithium ions, is preferable because these compounds exhibit excellent high-speed charging and discharging characteristics, suppress the deterioration of an electrode, and can increase the life of a lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Examples of such an active material include negative electrode active materials having a silicon atom or a tin atom, and respective metals such as Al, In, and the like; and a negative electrode active material having a silicon atom which achieves a higher battery capacity (silicon atom-containing active materials) is preferable, and a silicon atom-containing active material having a silicon atom content of 40 mol% or more of all constituent atoms is more preferable.

Generally, a negative electrode containing these negative electrode active materials (for example, an Si negative electrode containing a silicon atom-containing active material and an Sn negative electrode containing a tin atom-containing active material) can absorb a larger amount of Li ions than carbon negative electrodes (such as graphite and acetylene black). That is, the amount of Li ions absorbed per unit mass increases. Therefore, the battery capacity (energy density) can be increased. As a result, there is an advantage in that the battery driving duration can be extended.

Examples of the silicon atom-containing active material include a silicon material such as Si and SiOx (0 < x ≤ 1), an alloy containing titanium, vanadium, chromium, manganese, nickel, copper, or lanthanum (for example, LaSi₂ and VSi₂), a structured active material (for example, LaSi₂/Si), and an active material containing a silicon atom and a tin atom, such as SnSiO₃ and SnSiS₃. Since SiOx itself can be used as the negative electrode active material (the metalloid oxide) and Si is produced along with the operation of the battery, SiOₓ can be used as an active material (or a precursor material thereof) capable of forming an alloy with lithium.

Examples of the negative electrode active materials having a tin atom include Sn, SnO, SnO₂, SnS, SnS₂, and active materials containing the above-described silicon atom and a tin atom. In addition, examples thereof include a composite oxide with lithium oxide, for example, Li₂SnO₂.

In the present invention, the negative electrode active material is preferably a carbonaceous material and more preferably artificial graphite.

A shape of the negative electrode active material is not particularly limited, but is preferably a particulate shape. An average particle diameter (sphere equivalent average particle diameter) of the negative electrode active material is preferably 0.1 to 60 µm. In order to have a predetermined particle diameter, a typical pulverizer or classifier is used. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used.

In a case where a commercially available negative electrode active material is used, the average particle diameter of the negative electrode active material is adopted as the value described in the catalog of the manufacturer.

In a case where the information on the average particle diameter of the manufacturer cannot be obtained or in a case where a synthesized negative electrode active material is used, the average particle diameter value (volume-based median diameter D50 in water) obtained by dispersing the negative electrode active material in water and measuring the average particle diameter with a laser diffraction/scattering-type particle size distribution analyzer (for example, Particle LA-960V2 manufactured by HORIBA, Ltd.) is adopted.

One kind of the above-described negative electrode active material may be used alone, or two or more kinds thereof may be used in combination. Among these, a combination of the silicon atom-containing active material and the carbonaceous material is preferable, and a combination of SiOx (0 < x ≤ 1) and graphite is particularly preferable. A mass ratio **(SiOx/graphite)** in a case of combining SiOx (0 < x ≤ 1) and graphite is preferably 2 or less, more preferably 1 or less, and still more preferably 0.5 or less.

In a case of forming the negative electrode active material layer, a mass (mg) of the negative electrode active material per unit area (cm²) of the negative electrode active material layer (mass per unit area) is not particularly limited. The mass per unit area can be appropriately determined depending on the designed battery capacity.

A chemical formula of a compound obtained by the above-described baking method can be calculated using an inductively coupled plasma (ICP) emission spectroscopy as a measuring method from the mass difference of powder before and after baking as a convenient method.

### <Conductive auxiliary agent>

The conductive auxiliary agent is not particularly limited, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material and more preferably acetylene black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

One kind of conductive auxiliary agent or two or more kinds of conductive auxiliary agents may be used.

A shape of the conductive auxiliary agent is not particularly limited, but is preferably a particulate shape. A median diameter D50 (based on volume) of the conductive auxiliary agent is not particularly limited, and is, for example, preferably 0.01 to 50 µm and preferably 0.02 to 10.0 µm.

### <Other components>

The electrode slurry can contain, as desired, an ionic liquid, a thickener, an antifoaming agent, a leveling agent, a dehydrating agent, an antioxidant, or the like.

### <Content of each component>

A content of the electrode active material in the positive electrode slurry and a content of the electrode active material in the negative electrode slurry are each preferably 40% to 90% by mass, more preferably 50% to 90% by mass, still more preferably 60% to 90% by mass, and particularly preferably 65% to 85% by mass.

The content of the positive electrode active material in the positive electrode slurry is not particularly limited, but is preferably 60% to 90% by mass, more preferably 65% to 85% by mass, and still more preferably 70% to 80% by mass.

The content of the negative electrode active material in the negative electrode slurry is not particularly limited, but is preferably 50% to 90% by mass, more preferably 55% to 80% by mass, and still more preferably 60% to 80% by mass.

A content of the conductive auxiliary agent in the positive electrode slurry and a content of the conductive auxiliary agent in the negative electrode slurry are each preferably 0.1% to 10% by mass, and more preferably 0.5% to 5.0% by mass.

The content of the conductive auxiliary agent in the positive electrode slurry can be 0.5% to 10% by mass, preferably 0.6% to 8.0% by mass, more preferably 0.8% to 5.0% by mass, and still more preferably 1.0% to 3.0% by mass.

The content of the conductive auxiliary agent in the negative electrode slurry can be 0.1% to 3.0% by mass, preferably 0.2% to 2.5% by mass, more preferably 0.5% to 2.0% by mass, and still more preferably 0.8% to 1.5% by mass.

In the slurry according to the embodiment of the present invention, it is preferable that the content of the electrode active material is 40% to 90% by mass and the content of the conductive auxiliary agent is 0.1% to 10% by mass.

The content of the other components is not particularly limited, but is preferably 1% by mass or less.

A content of the solid particles (the electrode active material and the conductive auxiliary agent) in the slurry according to the embodiment of the present invention is preferably 40% to 95% by mass, more preferably 50% to 90% by mass, and still more preferably 60% to 85% by mass in total.

A content of the non-aqueous electrolytic solution in the slurry according to the embodiment of the present invention is preferably 5% to 60% by mass, more preferably 10% to 50% by mass, and still more preferably 15% to 40% by mass.

### [Non-aqueous electrolytic solution secondary battery and manufacturing method of non-aqueous electrolytic solution secondary battery]

The non-aqueous electrolytic solution secondary battery according to the embodiment of the present invention (hereinafter, also referred to as "secondary battery according to the embodiment of the present invention") is a non-aqueous electrolytic solution secondary battery having the slurry according to the embodiment of the present invention as an electrode active material layer. In addition, the manufacturing method of a non-aqueous electrolytic solution secondary battery according to the embodiment of the present invention includes incorporating the slurry according to the embodiment of the present invention as an electrode active material layer.

Before the description of the secondary battery according to the embodiment of the present invention, a structure of a general non-aqueous electrolytic solution secondary battery will be described.

Fig. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons (e⁻) are supplied to the negative electrode side through an external circuit, lithium ions (Li⁺) move from the positive electrode through the electrolytic solution and are accumulated in the negative electrode. On the other hand, during discharge, while the lithium ions (Li⁺) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

In the present invention and the present specification, the negative electrode collector 1 and the negative electrode active material layer 2 are collectively referred to as a negative electrode or a negative electrode layer; the positive electrode active material layer 4 and the positive electrode collector 5 are collectively referred to as a positive electrode or a positive electrode layer; and the negative electrode and the positive electrode are collectively referred to as an electrode or an electrode layer. In addition, the negative electrode active material layer 2 and the positive electrode active material layer 4 are collectively referred to as an electrode active material layer.

Subsequently, a basic configuration characteristic of the secondary battery according to the embodiment of the present invention will be described. In the secondary battery according to the embodiment of the present invention, as described above, the electrode active material layer is an electrode slurry layer in which an electrode active material is dispersed in a non-aqueous electrolytic solution. Therefore, the secondary battery according to the embodiment of the present invention is different from a general non-aqueous electrolytic solution secondary battery in terms of the fact that the electrode active material layer is a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the secondary battery according to the embodiment of the present invention, the electrode active material layer is an electrode slurry layer obtained by dispersing the solid particles containing the electrode active material and the conductive auxiliary agent in the non-aqueous electrolytic solution which is obtained by dissolving the lithium salt (electrolyte) and the polymer (I) in the non-aqueous solvent. In a case where the electrode slurry layer functions as the electrode active material layer, a strong bonding property is not required between the electrode active material particles, and thus the electrode slurry layer generally does not contain a binding material. The basic layer configuration of the secondary battery according to the embodiment of the present invention is the same as the layer configuration shown in Fig. 1, except that the electrode active material layer is an electrode slurry layer and the electrode slurry layer and the separator are in contact with each other.

Hereinafter, preferred aspects of the secondary battery according to the embodiment of the present invention will be described.

A preferred aspect of the secondary battery according to the embodiment of the present invention is a secondary battery including a positive electrode active material layer, a separator, and a negative electrode active material layer in this order, in which at least one of the positive electrode active material layer or the negative electrode active material layer is a layer of the slurry according to the embodiment of the present invention. Both the positive electrode active material layer and the negative electrode active material layer may be layers of the slurry according to the embodiment of the present invention.

In a case where any of the positive electrode active material layer or the negative electrode active material layer is formed of an electrode slurry other than the slurry according to the embodiment of the present invention, as the electrode active material layer other than the slurry according to the embodiment of the present invention, an electrode active material layer such as an electrode slurry layer, using a medium containing an electrolyte, can be usually used.

Hereinafter, the electrode slurry layer which is a positive electrode active material layer may be referred to as a positive electrode slurry layer; and the electrode slurry layer which is a negative electrode active material layer may be referred to as a negative electrode slurry layer.

It is preferable that the positive electrode slurry layer forms a laminate with a positive electrode collector to constitute a positive electrode.

It is preferable that the negative electrode slurry layer forms a laminate with a negative electrode collector to constitute a negative electrode.

In the above-described non-aqueous electrolytic solution secondary battery, it is preferable that the above-described positive electrode slurry layer is interposed between the positive electrode collector and the above-described separator. In addition, it is preferable that the above-described negative electrode slurry layer is interposed between the negative electrode collector and the above-described separator. That is, it is preferable that the positive electrode layer is composed of the laminate of the positive electrode collector and the positive electrode slurry layer, and the negative electrode layer is composed of the laminate of the negative electrode collector and the negative electrode slurry layer.

A thickness of the positive electrode slurry layer is preferably 100 µm or more, more preferably 150 µm or more, also preferably 200 µm or more, also preferably 250 µm or more, and also preferably 300 µm or more. In addition, the thickness of the positive electrode slurry layer is usually 1,000 µm or less, preferably 800 µm or less, more preferably 700 µm or less, and may be 650 µm or less. In a case where the thickness of the positive electrode slurry layer is shown as a preferred range, the thickness is preferably 100 to 1,000 µm, more preferably 150 to 800 µm, still more preferably 200 to 700 µm, even more preferably 250 to 700 µm, and particularly preferably 300 to 650 µm.

A thickness of the negative electrode slurry layer is preferably 100 µm or more, more preferably 150 µm or more, also preferably 200 µm or more, also preferably 250 µm or more, and also preferably 300 µm or more. In addition, the thickness of the negative electrode slurry layer is usually 1,000 µm or less, preferably 800 µm or less, more preferably 700 µm or less, and may be 650 µm or less. In a case where the thickness of the negative electrode slurry layer is shown as a preferred range, the thickness is preferably 100 to 1,000 µm, more preferably 150 to 800 µm, still more preferably 200 to 700 µm, even more preferably 250 to 700 µm, and particularly preferably 300 to 650 µm.

A method of forming the laminate (positive electrode layer member) of the positive electrode collector and the positive electrode slurry layer is not particularly limited, and for example, the positive electrode layer member can be obtained by applying a slurry for a positive electrode, containing a constituent component of the positive electrode slurry layer (the solvent, the positive electrode active material, the electrolyte, the additive as necessary, a conductive auxiliary agent, and the like), onto the positive electrode collector to form a coating film having a desired thickness.

A method of applying the slurry is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

A method of forming the laminate (negative electrode layer member) of the negative electrode collector and the negative electrode slurry layer is not particularly limited, and it can be appropriately formed according to the method of forming the laminate (positive electrode layer member) of the positive electrode collector and the positive electrode slurry layer.

As each of the materials, the members, and the like used in the non-aqueous electrolytic solution secondary battery according to the embodiment of the present invention, those used in a typical non-aqueous electrolytic solution secondary battery can be appropriately applied except for the polymer (I) used in the non-aqueous electrolytic solution. In addition, in the manufacturing method of a non-aqueous electrolytic solution secondary battery according to the embodiment of the present invention, a typical method can be appropriately adopted except that the electrode active material layer is formed as a specific slurry layer. For example, JP2016-201308A, JP2005-108835A, JP2012-185938A, JP2017-147222A, and the like can be appropriately referred to.

### <Use of non-aqueous electrolytic solution secondary battery>

In a case of being mounted in an electronic apparatus, the non-aqueous electrolytic solution secondary battery can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Among these, it is preferable to apply the non-aqueous electrolytic solution secondary to an application in which high capacity and high rate discharge characteristics are required. For example, in a power storage facility or the like in which an increase in capacity is expected in the future, high safety is essential and it is required to achieve battery performance. In addition, it is assumed that electric vehicles and the like are equipped with high-capacity secondary batteries and are used for daily charging at home. According to the present invention, it is possible to suitably respond to such a usage form and exhibit the excellent effect.

### Examples

Hereinafter, the present invention will be more specifically described based on Examples, but the present invention is not limited to the embodiments.

### [Preparation of polymer]

### <Preparation of polymer 1>

A polymer 1a consisting of constitutional components shown in Table 1 below was prepared as follows.

10 g of styrene, 6 g of maleic acid anhydride, 4 g of methyl methacrylate, 1.5 g of azobis(isobutyronitrile), and 40 g of methyl ethyl ketone were mixed at room temperature to prepare a solution A.

100 g of methyl ethyl ketone was added to a three-neck flask equipped with a stirrer, a thermometer, a reflux condenser, a thermostat, and a dropping pump while performing nitrogen purge, and the temperature was raised to 85°C with stirring. The solution A prepared above was added dropwise to the three-neck flask at a constant rate for 1 hour, using a dropwise addition pump. After completion of the dropwise addition, the mixture was stirred at the same temperature, and the reaction was completed after 5 hours. After completion of the reaction, the solution was concentrated to obtain the polymer 1a. A weight-average molecular weight of the obtained polymer 1a was approximately 10,000.

Polymers 1b to 1f were prepared in the same manner as in the preparation of the polymer 1a described above, except that, in the preparation of the polymer 1a, the addition amount of azobis(isobutyronitrile) was changed such that the obtained polymer had a weight-average molecular weight shown in Table 2.

### <Preparation of polymers 2 and 3>

Polymers 2 and 3 were prepared in the same manner as in the preparation of the polymer 1a described above, except that the type and blending amount (parts by mass) of the monomer in the preparation of the polymer 1a were as shown in Table 1.

**[Table 1]**

| Table 1: Formulation of polymer | | | | | |
|---|---|---|---|---|---|
| Type of polymer | Monomer | | | | |
| | St | MA | DM | HEMA | MMA |
| 1a to 1f | 50 | 30 | | | 20 |
| 2 | 50 | | 30 | | 20 |
| 3 | 50 | | | 30 | 20 |

The abbreviations in Table 1 are as follows.
St: styrene
MA: maleic acid anhydride
DM: dimethylaminoethyl methacrylate
HEMA: 2-hydroxyethyl methacrylate
MMA: methyl methacrylate

A blank indicates that the component was not contained. The numerical value of the blending amount of each component is parts by mass.

A weight-average molecular weight (Mw) of each of the above-described polymers was measured as described above. The results are shown in Table 2.

Furthermore, the adsorption rate of each polymer to the following three kinds of solid particles (powders) was determined according to the method of determining the adsorption rate to acetylene black described above. In a case where the solid particles are solid particles other than acetylene black, the adsorption rate was calculated by the same method as the adsorption rate to acetylene black, except that these solid particles were used instead of the acetylene black. The results are shown in the column of "Adsorption rate of polymer" in Table 2 by dividing by the type of solid particles used.

### -Used solid particles-

LFP: LiFePO₄, manufactured by Gelon Lib Group Co., Ltd.

AB: acetylene black, DENKA BLACK (trade name), manufactured by Denka Co., Ltd., powdery, average primary particle diameter (volume-based median diameter D50): 35 nm, specific surface area: 68 m²/g

Artificial graphite: UF-G30 (trade name), manufactured by Showa Denko K.K.

In all of the polymers 1a to 1f, 2, and 3, the aromatic ring content was 40% by mass or more. Furthermore, the polymers 1a to 1f had an acid value of 30 mgKOH/g or more. The polymer 2 had an amine value of 30 mgKOH/g or more. The polymer 3 had a hydroxyl number of 30 mgKOH/g or more. The aromatic ring content, the acid value, the amine value, and the hydroxyl number were measured by the above-described methods.

An electrode slurry containing each of the above-described polymers was prepared as follows, and a secondary battery was produced using the obtained electrode slurry.

[Preparation of electrode slurry]

### <Preparation of electrolytic solution>

As a solvent, ethylene carbonate (EC), dimethyl carbonate (DMC), and ethyl methyl carbonate (EMC) were mixed at a mass ratio of EC:DMC:EMC = 3:4:3, LiPF₆ was blended as a lithium salt to a concentration of 1 M, and the polymer 1a was blended to a concentration of 0.1% by mass in the electrolytic solution, thereby producing an electrolytic solution used in Example 1.

Electrolytic solutions used in Examples 2 to 10 and electrolytic solutions used in Comparative Examples 2 and 3 were prepared by changing the polymer type, Mw, and polymer content as shown in Table 2 in the preparation of the electrolytic solution used in Example 1. The electrolytic solution used in Comparative Example 1 was prepared without blending the polymer in the preparation of the electrolytic solution used in Example 1.

In the electrolytic solution containing these polymers, each polymer was dissolved.

### <Preparation of positive electrode slurry>

74% by mass of LiFePO₄ (manufactured by Gelon Lib Group Co., Ltd.) as an active material, 1.5% by mass of acetylene black (manufactured by Denka Co., Ltd., DENKA BLACK (trade name)) as a conductive auxiliary agent of a carbonaceous material, and 24.5% by mass of each of the electrolytic solutions obtained above were mixed and stirred at 1,000 rpm for 120 seconds with a centrifugal planetary mixer (manufactured by Thinky Corporation: Awatori Nentaro) to obtain positive electrode slurries of Examples 1A to 10A and Comparative Examples 1A to 3A.

### <Preparation of negative electrode slurry>

64% by mass of artificial graphite (manufactured by Showa Denko K.K., UF-G30 (trade name)) as an active material of a carbonaceous material, 1% by mass of acetylene black (manufactured by Denka Co., Ltd., DENKA BLACK (trade name)) as a conductive auxiliary agent of a carbonaceous material, and 35% by mass of each of the electrolytic solutions obtained above were mixed and stirred at 1,000 rpm for 120 seconds with a centrifugal planetary mixer (manufactured by Thinky Corporation: Awatori Nentaro) to obtain negative electrode slurries of Examples 1B to 10B and Comparative Examples 1B to 3B.

### [Battery production]

Each of the positive electrode slurries obtained above was applied onto an aluminum collector (aluminum foil) to have a thickness of 300 µm, thereby producing a positive electrode having a collector and a positive electrode active material layer. In addition, each of the negative electrode slurries obtained above was applied onto a copper collector (copper foil) to have a thickness of 300 µm, thereby producing a negative electrode having a collector and a negative electrode active material layer. Thereafter, a polypropylene separator (thickness: 25 µm) was placed on the negative electrode, and then the positive electrode was placed thereon to obtain an electrode laminate consisting of copper collector-negative electrode active material layer-separator-positive electrode active material layer-aluminum collector.

In each obtained electrode laminate, an aluminum tab was attached to an end part of the aluminum collector and a nickel tab was attached to an end part of the copper collector by ultrasonic welding to obtain an electrode group. The electrode group was sandwiched between two aluminum laminate films, three sides were heat-sealed, and the remaining one side was vacuum-sealed to produce a laminated type battery (non-aqueous electrolytic solution secondary battery).

In addition, in a case of producing the electrode laminate, a positive electrode slurry and a negative electrode slurry, containing the same polymer, were used in combination. For example, the positive electrode slurry of Example 1A and the negative electrode slurry of Example 1B were combined to form the electrode laminate. The battery including the positive electrode slurry of Example 1A and the negative electrode slurry of Example 1B is referred to as a secondary battery of Example 1 for convenience. The same applies to Examples 2 to 10 and Comparative Examples 1 to 3.

Each of the laminated batteries was charged to 3.6 V at 0.1 C under the following conditions, and then discharged to 2.0 V to complete initialization of the battery. The discharge capacity at the time of discharging during the initialization was obtained as an initial discharge capacity. The initial discharge capacity of the laminated battery of Example 1 was 100 mAh/g.

### -Initialization conditions (charging and discharging conditions at 0.1 C)-

Charging: constant current (CC) and constant voltage (CV) charging; CC current: 10 mA, cutoff voltage: 3.6 V, CV cutoff current: 0.5 mA
Discharging: constant current (CC) discharging; CC current: 10 mA, cutoff voltage: 2.0 V

### [Battery performance]

The battery performance of each of the initialized laminated batteries was evaluated as follows.

Specifically, the initialized laminated battery was charged and discharged at 1 C under the following conditions, and the discharge capacity during discharging was obtained as the discharge capacity at 1 C.

From the initial discharge capacity (discharge capacity at 0.1 C) and the discharge capacity at 1 C obtained above, a discharge capacity retention rate was calculated according to the following expression, and the evaluation was carried out by applying the calculated value to the following evaluation standard.

### -Charging and discharging conditions at 1 C-

Constant current (CC) and constant voltage (CV) charging: CC current: 10 mA, cutoff voltage: 3.6 V, CV cutoff current: 0.5 mA

Constant current (CC) discharging: CC current: 100 mA, cutoff voltage: 2.0 V [Discharge capacity retention rate (%)] = [(Discharge capacity at 1 C)/(Initial discharge capacity at 0.1 C)] × 100

### -Evaluation standard for discharge capacity retention rate-

A: 90% or more
B: 88% or more and less than 90%
C: 85% or more and less than 88%
D: less than 85%

### [Evaluation of wettability]

Wettability of the solid particles constituting the positive electrode and the negative electrode in the electrolytic solution containing each of the polymers obtained above was evaluated by a wettability test with pellet-shaped solid particles.

### <Positive electrode green compact>

1 g of powder obtained by mixing LiFePO₄ (LFP) and acetylene black at a mass ratio of 75:1.5 was pelletized into a cylindrical shape having a diameter of 1 cm under a pressure of 10 MPa, thereby obtaining a green compact.

A time taken for the liquid droplet of the electrolytic solution to permeate into the pellet was measured in a case where 100 µl of the electrolytic solution obtained above was added dropwise to the surface of the pellet, and the evaluation was carried out according to the following evaluation standard. The penetration of the liquid droplet was observed using a contact angle meter, and the time from when the droplet was dropped until when the droplet disappeared from the surface was measured.

### -Evaluation standard for wettability with respect to positive electrode green compact-

A: shorter than 1 second
B: 1 second or longer and shorter than 5 seconds
C: 5 seconds or longer and shorter than 10 seconds
D: 10 seconds or longer

### <Negative electrode green compact>

1 g of powder obtained by mixing artificial graphite and acetylene black at a mass ratio of 64:1 was pelletized into a cylindrical shape having a diameter of 1 cm under a pressure of 10 MPa, thereby obtaining a green compact.

A time taken for the liquid droplet of the electrolytic solution to permeate into the pellet was measured in a case where 100 µl of the electrolytic solution obtained above was added dropwise to the surface of the pellet, and the evaluation was carried out according to the following evaluation standard. The penetration of the liquid droplet was observed using a contact angle meter, and the time from when the droplet was dropped until when the droplet disappeared from the surface was measured.

### -Evaluation standard for wettability with respect to negative electrode green compact-

A: shorter than 1 second
B: 1 second or longer and shorter than 5 seconds
C: 5 seconds or longer and shorter than 10 seconds
D: 10 seconds or longer

**[Table 2]**

| | Type of polymer | Mw | Amount of polymer in electrolytic solution (% by mass) | Adsorption rate of polymer (%) | | | Discharge capacity retention rate | Evaluation of wettability | |
|---|---|---|---|---|---|---|---|---|---|
| | | | | LFP | AB | Artificial graphite | | Positive electrode green compact | Negative electrode green compact |
| Example 1 | 1a | 10000 | 0.1 | 15 | 25 | 20 | B | B | B |
| Example 2 | 1a | 10000 | 0.5 | 15 | 25 | 20 | A | A | A |
| Example 3 | 1a | 10000 | 1.0 | 15 | 25 | 20 | A | A | A |
| Example 4 | 1a | 10000 | 3.0 | 15 | 25 | 20 | A | A | A |
| Example 5 | 1a | 10000 | 5.0 | 15 | 25 | 20 | B | B | B |
| Example 6 | 1b | 1000 | 1.0 | 15 | 25 | 20 | A | A | A |
| Example 7 | 1c | 50000 | 1.0 | 15 | 25 | 20 | A | A | A |
| Example 7 | 1d | 100000 | 1.0 | 15 | 25 | 20 | B | B | B |
| Example 8 | 1e | 150000 | 1.0 | 15 | 25 | 20 | C | C | C |
| Example 9 | 2 | 10000 | 1.0 | 12 | 20 | 15 | B | B | B |
| Example 10 | 3 | 10000 | 1.0 | 8 | 15 | 10 | C | C | C |
| Comparative Example 1 | - | - | - | - | - | - | D | D | D |
| Comparative Example 2 | 1a | 10000 | 7.5 | 15 | 25 | 20 | D | D | D |
| Comparative Example 3 | 1f | 200000 | 3.0 | 15 | 25 | 20 | D | D | D |

In all of the electrode slurry of Comparative Example 1, in which an electrolytic solution not containing the polymer was used, the electrode slurry of Comparative Example 2, in which an electrolytic solution having an excessively high content of the polymer was used, and the electrode slurry of Comparative Example 3, in which an electrolytic solution having an excessively high weight-average molecular weight of the polymer was used, the discharge capacity retention rate was less than 85% in a case of being used in the secondary battery. It is considered that this is because the affinity between the solid particles and the electrolytic solution was low in these electrode slurries. In fact, in the wettability test for the pellets of the solid particles constituting the positive electrode and the negative electrode, all of the electrolytic solutions used in the preparation of the electrode slurries of Comparative Examples 1 to 3 took 10 seconds or longer to disappear from the surface of the pellet.

On the other hand, in all of the electrode slurries of Examples 1 to 10, using the electrolytic solution containing 0.1% to 5.0% by mass of the polymers 1a to 1e, 2, and 3 having a weight-average molecular weight of 1,000 to 150,000, the discharge capacity retention rate was excellent in a case of being used in the secondary battery.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-175037 filed in Japan on October 31, 2022, the contents of which are incorporated herein by reference, as a part of the description of the present specification.

### Explanation of References

10: non-aqueous electrolytic solution secondary battery
1: negative electrode collector
2: negative electrode active material layer
3: separator
4: positive electrode active material layer
5: positive electrode collector
6: operation portion (light bulb)

## Claims

1. A slurry for a non-aqueous electrolytic solution secondary battery, comprising:
solid particles containing an electrode active material and a conductive auxiliary agent, the solid particles being dispersed in a non-aqueous electrolytic solution,
wherein the non-aqueous electrolytic solution is obtained by dissolving a lithium salt and a polymer (I) in a non-aqueous solvent,
the polymer has a weight-average molecular weight of 1,000 to 150,000, and
a content of the polymer (I) in the non-aqueous electrolytic solution is 0.1% to 5.0% by mass.

2. The slurry for a non-aqueous electrolytic solution secondary battery according to claim 1, wherein an adsorption rate of the polymer (I) to acetylene black is 15% or more.

3. The slurry for a non-aqueous electrolytic solution secondary battery according to claim 1, wherein the electrode active material is a positive electrode active material, and
an adsorption rate of the polymer (I) to the positive electrode active material is 10% or more.

4. The slurry for a non-aqueous electrolytic solution secondary battery according to claim 1, wherein the electrode active material is a negative electrode active material, and
an adsorption rate of the polymer (I) to the negative electrode active material is 10% or more.

5. The slurry for a non-aqueous electrolytic solution secondary battery according to claim 1,
wherein the polymer (I) includes at least one of an amino group, a carboxy group, a phosphate group, a phosphonic acid group, a sulfo group, a hydroxy group, a carbamoyl group, or an aromatic group.

6. The slurry for a non-aqueous electrolytic solution secondary battery according to claim 1,
wherein a content of the electrode active material in the slurry for a non-aqueous electrolytic solution secondary battery is 40% to 90% by mass, and
a content of the conductive auxiliary agent in the slurry for a non-aqueous electrolytic solution secondary battery is 0.1% to 10% by mass.

7. A non-aqueous electrolytic solution secondary battery comprising:
the slurry for a non-aqueous electrolytic solution secondary battery according to any one of claims 1 to 6, as an electrode active material layer.

8. A manufacturing method of a non-aqueous electrolytic solution secondary battery, comprising:
incorporating the slurry for a non-aqueous electrolytic solution secondary battery according to any one of claims 1 to 6 as an electrode active material layer.
